# EUROPEAN PATENT APPLICATION

(11) **EP 1 813 500 A1**
(43) Date of publication of application: **01.08.2007**
(21) Application number: 05728645.2
(22) Date of filing: 07.04.2005
(51) Int. Cl.: B61L 27/00

(54) **TRAIN OPERATION MANAGEMENT SYSTEM**

(30) Priority: 15.11.2004 JP 2004330148
(71) Applicant: MITSUBISHI DENKI KABUSHIKI KAISHA, Chiyoda-ku, Tokyo 100-8310 (JP)
(72) Inventor: KATAOKA, Kenji, Tokyo 100-8310 (JP); FUKAWA, Tatsuya, Tokyo 100-8310 (JP)
(74) Representative: Sajda, Wolf E.
(86) International application number: PCT/JP2005/006882
(87) International publication number: WO 2006/051625

(57) **Abstract**

A train operations management system enables an operations controller to carry out crew deployment disruption resolution easily. Preset restriction conditions stipulating restrictions in paths and crew member deployment disruption information are examined, warnings respective to the paths are output, and until all the warnings clear, with respect to paths in which multiple deployment disruptions have arisen, in order from the highest priority of urgent resolution of the deployment disruption, resolution information is successively sent to crew member deployment disruption forecasting means and crew deployment information is updated, and when the warnings have been cleared the crew deployment information recorded in crew deployment information registering means is suggested as resolution information.

## Description

### Technical Field

This invention relates to a train operations management system for carrying out the deployment of drivers and conductors serving on trains.

### Background Art

In operations management systems of related art, interlocking devices are operated with lever panels installed at stations to control signals and points. Latest train situation data are fed to a central processing device via a local area network (LAN) from station control devices connected to the interlocking devices. In a recovery schedule drafting device, on the basis of the latest train situation data fed to the central processing device and a day's schedule for the day, a simulation is carried out with respect to all trains. On the basis of the results of this simulation and schedule drafting rules input in advance, train deployments are decided, and a recovery schedule is drafted by simulations being executed repeatedly until all registered trains reach their terminating stations.

Schedule recovery is carried out on the basis of the drafted recovery schedule. To conduct operations according to the recovery schedule, an operations controller orders duty areas to make deployment changes to paths such as the duty sections and times of train crew members by communicating schedule changes to them by telephone or facsimile or the like. Staff of the duty areas study the train crew path deployment changes on the basis of the indicated recovery schedule and instruct individual crew members by telephone or facsimile or the like.

Patent Document 1 : Japanese Patent Publication (unexamined) No. JP 7-132833 A.

### Disclosure of the Invention

### Problem to Be Solved by the Invention

In a train operations management system of related art, when it has become impossible for trains to operate in accordance with the schedule, due to schedule changes such as train delays and service suspensions, disruptions of crew member deployment arise such as crew members being late for the next train that they are to board, being unable to get to the station where they are to board, or boarding the wrong train.
In these cases, deployment changes for resolving crew deployment disruptions are carried out in accordance with judgements of the operations controller managing train operations. However, there has been the problem that when the train schedule is highly dense, the judgements of the operations controller become difficult.

This invention was made to solve the kinds of problem mentioned above, and it is an object of the invention to provide a train operations management system with which it is possible for an operations controller to carry out train crew deployment disruption resolution easily.

### Means of Solution to the Problem

The invention provides a train operation management system that, when it has become impossible for trains to run in accordance with a day's set schedule, restores them to the schedule, including:
schedule disruption forecasting means for, on the basis of train situation data and the day's schedule, forecasting schedule disruptions and drafting a forecast schedule;
crew deployment information registering means in which are recorded, as crew deployment information, paths each constituting a work itinerary of an individual crew member among crew doing duty on trains for operating the day's schedule;
crew member deployment disruption forecasting means for detecting multiple deployment disruptions arising in the paths from the crew deployment information and
the forecast schedule and outputting crew member deployment disruption information; restriction breach examining means for examining preset restriction conditions stipulating restrictions in the paths and the crew member deployment disruption information and outputting warnings respective to the paths;
crew member deployment disruption resolution suggesting means for suggesting resolution information for resolving the deployment disruptions of the paths;
suggestion registering means for, until all of the warnings clear, with respect to the paths in which deployment disruptions have arisen, successively sending the resolution information to the crew member deployment disruption forecasting means and
updating the crew deployment information in order from the highest priority of urgent resolution of the deployment disruption; and
approving mean for, when the warnings have been cleared, confirming the crew deployment information recorded in the crew deployment information registering means to the content suggested as the resolution information. By these means, the invention makes it possible for an operations controller to carry out train crew deployment disruption resolution easily.

### Effect of the Invention

According to a train operation management system of the invention, restriction breach examining means for examines preset restriction conditions stipulating restrictions in the paths and the crew member deployment disruption information and outputs warnings respective to the paths, crew member deployment disruption resolution suggesting means suggests resolution information for resolving the deployment disruptions of the paths, suggestion registering means, until all of the warnings clear, with respect to the paths in which deployment disruptions have arisen, successively sends the resolution information to the crew member deployment disruption forecasting means and updates the crew deployment information in order from the highest priority of urgent resolution of the deployment disruption, and approving means, when the warnings have been cleared, confirms the crew deployment information recorded in the crew deployment information registering means to the content suggested as the resolution information, and thereby it is possible for an operations controller to carry out train crew deployment disruption resolution easily.

### Best Mode for Carrying Out of the Invention

### Embodiment 1:

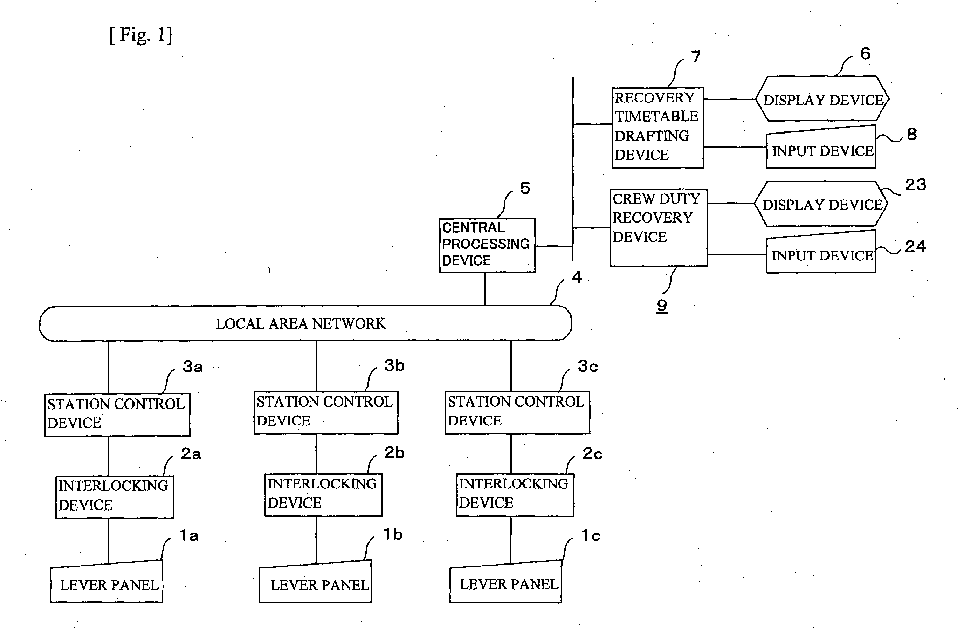

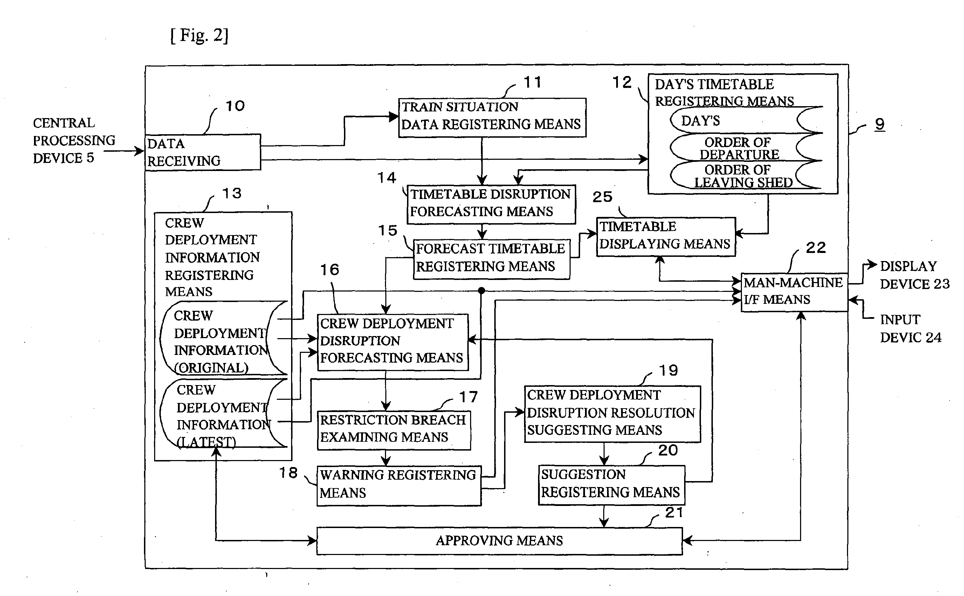

Fig. 1 is a schematic view of embodiment 1 of the invention, and Fig. 2 is a block diagram showing a main part of Fig. 1.

In Fig. 1 and Fig. 2, lever panels 1a to 1c installed at different stations are manually operated to control signals (not shown) and points (not shown) by way of interlocking devices 2a to 2c. On the basis of the results of these control operations, latest situation data of what trains are where on the tracks are transmitted from station control units 3a to 3c connected to the interlocking devices 2a to 2c to a central processing device 5 via a local area network 4. A display unit 6 connected to the central processing device 5 displays a train diagram with distance on a vertical axis and time on a horizontal axis.

In a recovery schedule drafting device 7, on the basis of data such as information about changes to the day's schedule input by an operations controller through an input device 8, the latest train situation data transmitted to the central processing device 5 from the station control units 3a to 3c, and the day's schedule registered in the central processing device 5, a simulation is carried out with respect to the paths of all trains.
On the basis of the results of this simulation and schedule drafting rules input in advance, train deployments are decided, and a recovery schedule is drafted by a simulation being executed repeatedly until all of the registered trains reach their terminating stations. This recovery schedule is connected to the day's schedule in the central processing device 5.

Data receiving means 10 of a crew member deployment recovery device 9 (see Fig. 2) are connected to the central processing device 5. The latest train situation data and the day's schedule are input via the data receiving means 10 and registered in train situation data registering means 11 and day's schedule registering means 12 respectively. And, crew deployment information (original) specifying paths such as duty sections and times of crew members is recorded in crew deployment information registering means 13.
In schedule disruption forecasting means 14, a forecast schedule in which schedule disruptions are predicted is drafted by means the same as those for the recovery schedule drafting simulation, on the basis of the latest train situation data and travel times and driving intervals from the day's schedule. The drafted forecast schedule is registered in forecast schedule registering means 15 by train number. It is usual for a forecast schedule to be drafted for up to several hours ahead.

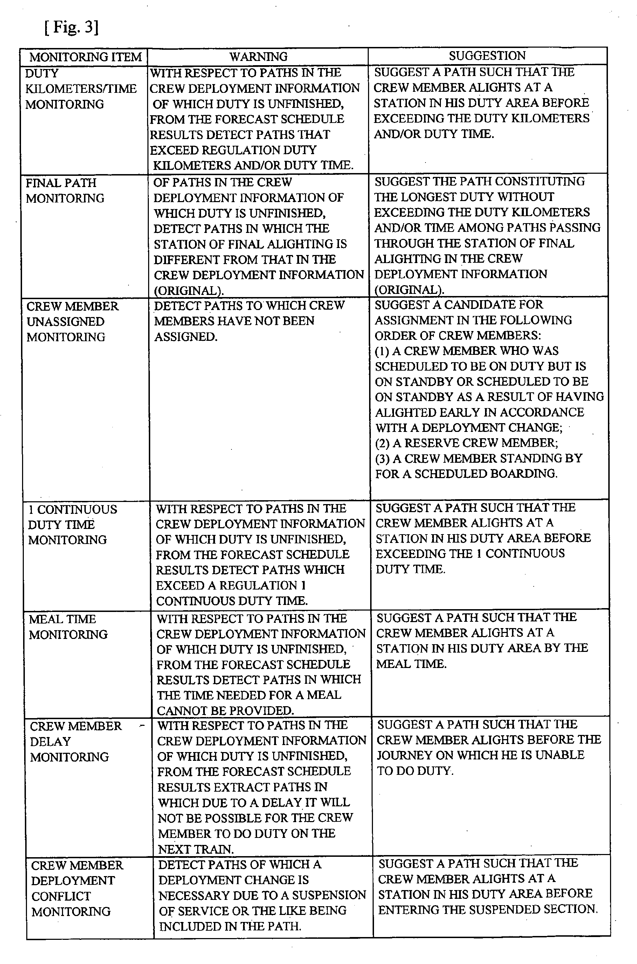

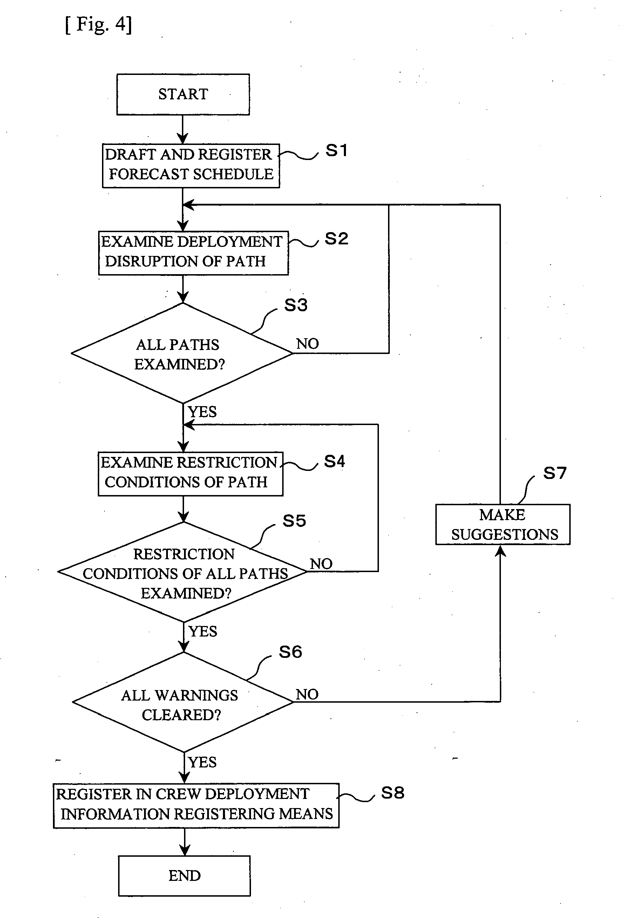

Fig. 3 is an explanatory view showing warnings and suggestions, and Fig. 4 is a flow chart illustrating a method for resolving warnings.

In Fig. 2 to Fig. 4, the forecast schedule drafted in the schedule disruption forecasting means 14 is registered in the forecast schedule registering means 15 (Step S1).

In crew member deployment disruption forecasting means 16, on the basis of the forecast schedule and the crew deployment information (original), deployment disruptions arising in paths each constituting a work itinerary of an individual crew member are examined and crew member deployment disruption information output for each path (Steps S2, S3). That is, in the crew member deployment disruption forecasting means 16, with reference to the forecast schedule and the crew deployment information (original), which is a collection of paths, for each path the arrival and departure times of each train, times of handing over of duty at stations, actual duty times, rest times, actual working hours and so on are calculated and crew member deployment disruption information is output.

Then, in restriction breach examining means 17, the deployment disruption information of each crew member and monitored items constituting preset restriction conditions shown in Fig. 3 are examined, and warnings are output as shown in Fig. 3 (Steps S4, S5). The warnings output from the restriction breach examining means 17 are registered in warning registering means 18.

When the restriction conditions are not satisfied in all the paths, crew member deployment disruption resolution suggesting means 19 makes suggestions for resolving the deployment disruption of each path, in correspondence with the warnings, as shown in Fig. 3 (Step S7).

The suggestions output from the crew member deployment disruption resolution suggesting means 19 are recorded in suggestion registering means 20. The suggestions respective to the warnings are displayed as deployment change proposals at least in the form of a list on a display device 23 by way of approving means 21 and man-machine I/F means 22.
Until all of the warnings displayed on the display device 23 are cleared, with respect to paths in which multiple deployment disruptions have arisen, suggestions are successively sent to the train crew deployment disruption forecasting means 16 in order from the highest priority of urgent resolution of the deployment disruption. And the crew deployment information is updated and the deployment disruptions of the paths are examined again (Step S2).

When the warnings respective to restriction conditions have been cleared in all of the paths, the crew deployment information (original) is copied and on the basis of the suggestions crew deployment information (latest) is drafted and registered in the crew deployment information registering means 13 (Step S8). Then, the crew deployment information (original) (latest) and the forecast schedule are displayed on the display device 23 via schedule display means 25 and the man-machine I/F means 22 on the basis of a command of the operations controller from an input device 24.

Here, when the operations controller intervenes to give approval, the operations controller selects in accordance with order of priority from those changes that he judges to be the most suitable, and inputs approvals to the approving means 21 through the input device 24 to make suggestions for problem resolution.
In this case, with respect to the updated crew deployment information (latest), by the judgement of the operations controller updating of the crew deployment information with other suggestions is carried out repeatedly, and if there cease to be any restriction breaches with respect to the monitored items the process ends.

In this way, preset restriction conditions stipulating restrictions in paths and crew member deployment disruption information are examined, the restriction breach examining means 17 outputs warnings respective to paths, the crew member deployment disruption resolution suggesting means 19 suggests resolution information for resolving deployment disruptions of paths, and until all of the warnings are cleared, with respect to paths in which deployment disruptions have arisen, in order from the highest priority of urgent resolution among multiple deployment disruptions resolution information is successively sent to the train crew deployment disruption forecasting means 16 and the suggestion registering means 20 updates the crew deployment information, and when the warnings have been cleared the approving means 21 finally sets the crew deployment information recorded in the crew deployment information registering means 13 to the content suggested as resolution information, whereby the operations controller can carry out crew member deployment disruption resolution easily.

Also, by the resolution information for resolving crew member deployment disruptions being suggested in accordance with order of priority until the warnings are cleared, the deployment disruptions can be cleared rapidly.

### Brief Description of Drawings

- Fig. 1: is a schematic system view showing embodiment 1 of the invention;
- Fig. 2: is a block diagram showing a main part of Fig. 1 which is a view showing embodiment 1 of the invention;
- Fig. 3: is an explanatory view illustrating the content of warnings and suggestions in Fig. 1 which is a view showing embodiment 1 of the invention; and
- Fig. 4: is a flow chart illustrating a method for resolving warnings in Fig. 1 which is a view showing embodiment 1 of Fig. 1.

### Description of Reference Numerals

- 13 =: crew deployment information registering means
- 14 =: schedule disruption forecasting means
- 16 =: crew member deployment disruption forecasting means
- 17 =: restriction breach examining means
- 19 =: crew member deployment disruption resolution suggesting means
- 21 =: approving means

## Claims

1. A train operation management system that, when it has become impossible for trains to run in accordance with a day's set schedule, restores them to the schedule, comprising:
- schedule disruption forecasting means (14) for, on the basis of train situation data and the day's schedule, forecasting schedule disruption and drafting a forecast schedule;
- crew deployment information registering means (13) in which are recorded, as crew deployment information, paths each constituting a work itinerary of an individual crew member among crew doing duty on trains for operating the day's schedule;
- crew member deployment disruption forecasting means (16) for detecting multiple deployment disruptions arising in the paths from the crew deployment information and the forecast schedule and outputting crew member deployment disruption information;
- restriction breach examining means (17) for examining preset restriction conditions stipulating restrictions in the paths and the crew member deployment disruption information and outputting warnings respective to the paths;
- crew member deployment disruption resolution suggesting means (19) for suggesting resolution information for resolving the deployment disruptions of the paths;
- suggestion registering means (20) for, until all of the warnings are cleared, with respect to the paths in which deployment disruptions have arisen, successively sending the resolution information to the crew member deployment disruption forecasting means and updating the crew deployment information in order from the highest priority of urgent resolution of the deployment disruption; and
- approving means (21) for, when the warnings have been cleared, finally setting the crew deployment information recorded in the crew deployment information registering means (13) to the content suggested as the resolution information.

2. A train operation management system according to claim 1,
**characterized in that** the crew member deployment disruption resolution suggesting means (19) suggests a path such that the crew member alights at a station in a duty area to which he belongs before exceeding a duty kilometers or duty time.

3. A train operation management system according to claim 1,
**characterized in that** with paths constituting work itineraries of individual crew members doing duty on trains for operating the day's schedule as crew deployment information, the crew member deployment disruption resolution suggesting means (19) suggests the path among paths passing through a final station of alighting of that crew deployment information that constitutes the longest duty without exceeding the duty kilometers and duty time.

4. A train operating management system according to claim 1,
**characterized in that** the crew member deployment disruption resolution suggesting means (19) suggests candidates for assignment in the following order (a) to (c) of crew members:
(a) crew members who were scheduled to be on duty but are on standby or scheduled to be on standby as a result of having alighted early due to a deployment change;
(b) reserve crew members;
(c) crew members on standby, scheduled to board.

5. A train operating management system according to claim 1,
**characterized in that** the crew member deployment disruption resolution suggesting means (19) suggests a path such that the crew member alights at a station in the duty area to which he belongs before exceeding a continuous duty time.

6. A train operating management system according to claim 1,
**characterized in that** the crew member deployment disruption resolution suggesting means (19) suggests a path such that the crew member alights at a station in the duty area to which he belongs by a meal time.

7. A train operating management system according to claim 1,
**characterized in that** the crew member deployment disruption resolution suggesting means (19) suggests a path such that the crew member alights before a journey on which he is unable to do duty.

8. A train operating management system according to claim 1,
**characterized in that** the crew member deployment disruption resolution suggesting means (19) suggests a path such that the crew member alights at a station in the duty area to which he belongs before entering a service-suspended section.
